**Europäisches Patentamt**

**European Patent Office**

**Office européen des brevets**

(19)

(11) Veröffentlichungsnummer : **0 656 369 A1**

(12) **EUROPÄISCHE PATENTANMELDUNG**

(21) Anmeldenummer : 94116226.5

(22) Anmeldetag : 23.11.91

(51) Int. Cl.[6] : **C08F 2/38**, C08F 220/12, C08G 18/62, C08K 5/29, C08L 33/06, C08F 8/30

Diese Anmeldung ist am 14 - 10 - 1994 als Teilanmeldung zu der unter INID-Kode 60 erwähnten Anmeldung eingereicht worden.

(30) Priorität : 06.12.90 DE 4038939

(43) Veröffentlichungstag der Anmeldung : 07.06.95 Patentblatt 95/23

(60) Veröffentlichungsnummer der früheren Anmeldung nach Art. 76 EPü : 0 493 673

(84) Benannte Vertragsstaaten : DE ES FR GB IT NL

(71) Anmelder : **BASF Aktiengesellschaft** Carl-Bosch-Strasse 38 D-67063 Ludwigshafen (DE)

(72) Erfinder : **Filges, Ulrich, Dr.** Otto-Dill-Strasse 15 D-67433 Neustadt (DE)
Erfinder : **Aydin, Oral, Dr.** Sophienstrasse 14 D-68165 Mannheim (DE)
Erfinder : **Auchter, Gerhard, Dr.** Paray-Le-Monial-Strasse 10 D-67098 Bad Dürkheim (DE)
Erfinder : **Barwich, Jürgen, Dr.** Triftbrunnenweg 27 D-67434 Neustadt (DE)
Erfinder : **Anders, Hermann, Dr.** Gartenstrasse 35 a D-67149 Meckenheim (DE)
Erfinder : **Langer, Werner, Dr.** Wittelsbachstrasse 41 D-67061 Ludwigshafen (DE)
Erfinder : **Vorspohl, Klaus, Dr.** Bannwasserstrasse 9 D-67069 Ludwigshafen (DE)

(54) **Mit Luftfeuchtigkeit selbsthärtbare Copolymerisate und Mischungen.**

(57)    Mit Luftfeuchtigkeit selbsthärtbare Copolymerisate auf der Basis von Acrylsäure-, Methacrylsäure- und/oder Vinylestern, die unter Verwendung von Silicium enthaltenen Reglern hergestellt wurden, sowie Mischungen derartiger Polymerisate mit Vernetzungskomponenten.
   Die Produkte eignen sich als mit Luftfeuchtigkeit selbsthärtbare Kleb-, Dichtungs- und Beschichtungsmassen.

EP 0 656 369 A1

Die vorliegende Erfindung betrifft neue mit Luftfeuchtigkeit selbsthärtbare Mischungen von Copolymerisaten auf der Basis von Acrylsäure-, Methacrylsäure- und/oder Vinylestern mit Vernetzungskomponenten folgenden Aufbaus bzw. folgender Zusammensetzung:

E) härtbare Mischungen aus

1) 40 bis 98 Gew.-% eines Copolymerisates E1 (= 100 Gew.-%) aus

    a) 60 bis 99,5 Gew.-% eines oder mehrerer $C_1$-$C_{24}$-Alkylester der Acryl- und/oder Methacrylsäure und/oder $C_1$-$C_2$-Vinylester (Verbindungen I),

    b) 0,5 bis 10 Gew.-% eines Comonomeren mit einer oder mehreren Hydroxylgrupen (Verbindungen VII) und

    c) 0 bis 30 Gew.-% weiterer Monomerer (Verbindungen IV),

und

2) 1 bis 30 Gew.-% eines zwei- oder mehrwertigen Isocyanats (Verbindungen VI) und

3) 1 bis 30 Gew.-% eines zwei- oder mehrwertigen Aldimins und/oder Ketimins (Verbindungen VIII), mit der Maßgabe, daß einer Hydroxylgruppe der Verbindungen VII 1,7 bis 2,3 Isocyanatgruppen der Verbindungen VI entsprechen.

Außerdem betrifft die Erfindung die Verwendung dieser härtbaren Mischungen E als mit Luftfeuchtigkeit selbsthärtbare Kleb-, Dichtungs- und Beschichtungsmassen sowie mit Luftfeutigkeit selbsthärtbare Kleb-, Dichtungs- und Beschichtungsmassen, die die härtbaren Mischungen E enthalten.

Aus der älteren deutschen Anmeldung P 3913168 sind Copolymerisate auf der Basis von Alkylacrylaten und/oder -methacrylaten mit freien Isocyanatgruppen bekannt, die als Klebe-, Dichtungs- und Beschichtungsmassen empfohlen werden.

Diese Copolymerisate vermögen jedoch nicht ganz zu befriedigen, da ihr an sich gutes Fließverhalten noch weiter verbesserungsbedürftig ist.

Eine Verbesserung des Fließverhaltens durch Verwendung üblicher Mercaptan-Regler ist zwar beschrieben, ihr Einsatz bedingt jedoch gleichzeitig eine unzureichende Vernetzung bei Feuchtigkeitseinwirkung, insbesondere dann, wenn zur Erniedrigung des Molekulargewichtes hohe Regler-Konzentrationen benötigt werden.

Copolymerisate mit freien Isocyanatgruppen und zusätzlichen freien Anhydridgruppen sind in der DE-A-38 04 589 beschrieben.

Diese Copolymerisate eignen sich jedoch nur als Bindemittelkomponenten in Zweikomponenten-Beschichtungs- und Dichtungsmassen, welche als weitere Komponenten organische Polyhydroxylverbindungen enthalten.

Aus der DE-A 3 601 272 sind Klebstoffe aus mindestens zweiwertigen Isocyanaten und anhydridhaltigen Copolymerisaten, die aktiven Wasserstoff enthalten, bekannt. Diese Klebstoffe werden naturgemäß nur als Zweikomponentenkleber empfohlen, da beim Vermischen der Komponenten zum Einkomponentenkleber die aktivierten Copolymerisate umgehend mit den Isocyanaten reagieren würden. Diese Reaktion bedingt zudem eine unzureichende Topfzeit durch rasches Gelieren bei der Anwendung des Klebstoffes. Darüber hinaus führt diese Reaktion aufgrund von frühzeitiger Decarboxylierung zur Blasenbildung und zu hoher Oberflächenklebrigkeit der Klebstoffe im ausgehärteten Zustand.

Isocyanathaltige Copolymerisate aus hydroxylhaltigen Acrylaten und zwei- oder mehrwertigen Isocyanaten sind in der DE-A 29 15 864 als härtbare Einkomponenten-Dichtungsmittel beschrieben. Nachteilig ist sowohl die durch die hohe Vernetzungsdichte der ausgehärteten Dichtungsmaterialien bedingte abnehmende Elastizität nach längerer Lagerung als auch die durch Decarboxylierung hervorgerufene Blasenbildung.

Aus der DE-A 37 10 963 sind anhydridhaltige Copolymerisate mit zwei- oder mehrwertigen Aldiminen und/oder Ketiminen bekannt, die als feuchtigkeitshärtbare Bindemittelkombinationen empfohlen werden. Diese Bindemittel zeigen jedoch ein schlechtes Fließverhalten und neigen im ausgehärteten Zustand zur Oberflächenklebrigkeit.

Der vorliegenden Erfindung lag daher die Aufgabe zugrunde, neue Copolymerisate und Mischungen aus derartigen Copolymerisaten mit Vernetzungskomponenten bereitzustellen, die verbesserte anwendungstechnische Eigenschaften aufweisen und insbesondere als mit Luftfeuchtigkeit selbsthärtbare Kleb-, Dichtungs- und Beschichtungsmassen verwendet werden können.

Demgemäß wurden die eingangs definierten Mischungen E sowie ihre Verwendung als mit Luftfeuchtigkeit selbsthärtbare Kleb-, Dichtungs- und Beschichtungsmassen gefunden.

Weiterhin wurden mit Luftfeuchtigkeit selbsthärtbare Kleb-, Dichtungs- und Beschichtungsmassen gefunden, die die härtbaren Mischungen E enthalten.

Als Verbindungen I eignen sich $C_1$-$C_{24}$-Alkylester der Acryl- und/oder Methacrylsäure und/oder $C_1$-$C_{20}$-Vinylester. Besonders bevorzugte Verbindungen I sind die $C_1$-$C_4$-Alkylester der Acryl- und/oder Methacrylsäure,

2

also z.B. Methyl-, Ethyl-, n-Propyl- und n-Butylacrylat und -methacrylat. Bevorzugt sind iso-Propyl-, iso-Butyl-, sec.-Butyl-, tert.-Butyl-, n-Pentyl-, n-Hexyl-, 2-Ethylhexyl-, Cyclohexyl-, n-Heptyl-, n-Octyl-, Phenylethyl- und Phenylpropylacrylat und -methacrylat. Weiterhin sind sauerstoffhaltige Alkylester der Acryl- und/oder Methacrylsäure wie 2-Ethoxyethyl-, 2-Butoxyethyl- und Furfurylacrylat und -methacrylat zu nennen. Daneben eignen sich Vinylester wie Vinylformiat, -acetat, -propionat, -butyrat, -laurat und -stearat.

Zusätzliche weitere Monomere als Verbindungen IV sind vor allem Vinylaromaten wie $\alpha$-Methylstyrol, $\beta$-Methylstyrol, Vinyltoluole und tert.-Butylstyrole, Halogenstyrole wie Chlorstyrole, Vinylether von $C_1$-$C_8$-Alkanolen wie Ethylvinylether, Vinylester von $C_2$-$C_{12}$-Alkansäuren wie Vinylacetat und Vinylpropionat, Vinylhalogenide wie Vinylchlorid, niedere ungesättigte Kohlenwasserstoffe wie $\alpha$-Olefine oder konjugierte Kohlenwasserstoffe wie Butadien und Isopren.

Besonders bevorzugte Verbindungen IV sind Styrol und ungesättigte Nitrile wie vornehmlich Acryl- und Methacrylnitril.

Als Verbindungen VI eignen sich zwei- oder mehrwertige Isocyanate, bevorzugt solche mit Isocyanatgehalten von 1 bis 60 Gew.-% NCO, besonders bevorzugt 5 bis 40 Gew.-% NCO.

Besonders bevorzugte Verbindungen VI sind Triisocyanate wie Tris-[4-isocyanat-phenyl]-methan und vor allem solche aus der Triisocyanuratreihe wie 2,4,6-Trioxo-1,3,5-tris-[3-isocyanat-4-methyl-phenyl]-hexahydro-1,3,5-triazin, 2,4,6-Trioxo-1,3,5-tris-[6-isocyanat-1-hexyl]-hexahydro-1,3,5-triazin und 2,4,6-Trioxo-1,3,5-tris-[5-isocyanat-1,3,3-trimethyl-cyclo-hexyl-methyl]-hexahydro-1,3,5-triazin. Daneben eignen sich 2-Ethyl-1,2,3-tris-[3-isocyanat-4-methyl-anilinocarbonyl-oxy]-propan und 2,4-Bis-[4-isocyanat-benzyl]-1-isocyanat-benzol.

Bevorzugte Verbindungen VI sind Diisocyanate wie vor allem 1,6-Bis-[isocyanat]-hexan, 2,4-Bis-[isocyanat]-toluol, 2,6-Bis-[isocyanat]-toluol, Bis-[4-isocyanatphenyl]-methan und ganz besonders 5-Isocyanat-3-(isocyanatmethyl)-1,1,3-trimethylcyclohexan (Isophorondiisocyanat). Daneben eignen sich 1,4-Bis-[2-isocyanatethyl]-cyclohexan und 1,3-Bis-[isocyanatmethyl]-cyclohexan.

Als Verbindungen VI kommen weiterhin Di- oder Triisocyanate von Allophanaten, Carbodiimiden, Uretdionen und vor allem Biureten wie Bis-[6-isocyanat-hexylaminocarbonyl]-(6-isocyanat-hexyl)-amin in Betracht.

Außerdem eignen sich als Verbindungen VI Polyurethan-Prepolymere aus Polyisocyanaten und Polyolen. Bevorzugt sind Polyurethan-Prepolymere mit Isocyanatgehalten von 1 bis 30 Gew.-% NCO, vorzugsweise 5 bis 20 Gew.-% NCO.

Bevorzugte Polyisocyanate sind Di- und Triisocyanate. Bevorzugte Polyole sind solche mit Funktionalitäten von 2 bis 3, vorzugsweise 2 und Molekulargewichten von 1000 bis 8000, vorzugsweise 1800 bis 6000. Bevorzugt sind Polythioetherpolyole, Polyesteramide, hydroxylgruppenhaltige Polyacetale und hydroxylgruppenhaltige aliphatische Polycarbonate. Besonders bevorzugt sind Polyesterpolyole und vor allem Polyetherpolyole, darunter insbesondere solche mit einer Funktionalität von 2 und Molekulargewichten von 1800 bis 4000.

Die Polyetherpolyole werden im allgemeinen durch anionische Polymerisation mit Alkalihydroxiden oder Alkalialkoholaten oder durch kationische Polymerisation mit Lewis-Säuren als Katalysatoren aus Alkylenoxiden und gegebenenfalls Startern hergestellt.

Bevorzugte Alkylenoxide sind Tetrahydrofuran, 1,3-Propylenoxid, 1,2- und 2,3-Butylenoxid, Styroloxid und Epichlorhydrin. Besonders bevorzugt sind Ethylenoxid und 1,2-Propylenoxid.

Als Starter eignen sich Wasser, organische Dicarbonsäuren wie Bernsteinsäure, Adipinsäure, Phthalsäure und Terephthalsäure, Alkanolamine wie Ethanolamin, Diethanolamin und Triethanolamin sowie Ammoniak. Bevorzugte Starter sind zwei- und dreiwertige Alkohole wie Ethandiol, 1,2- und 1,3-Propandiol, Diethylenglykol, Dipropylenglykol, Butandiol-1,4, Hexandiol-1,6, Trimethylolpropan und besonders bevorzugt Glycerin.

Als Verbindungen VII eignen sich Comonomere mit einer oder mehreren Hydroxylgruppen. Bevorzugt sind Hydroxyalkylacrylate und -methacrylate, darunter vor allem die Hydroxy-$C_2$-$C_6$-alkylester der Acryl- und Methacrylsäure wie Hydroxyethyl-, Hydroxypropyl-, Hydroxybutyl-, Hydroxypentyl- und Hydroxyhexylacrylat und -methacrylat.

Daneben eignen sich Polyethylenglykolmono- und Polypropylenglykolmonoacrylate und -methacrylate mit bis zu 6 Ethoxy- bzw. Propoxyeinheiten.

Als Verbindungen VIII kommen zwei- oder mehrwertige Aldimine und/oder Ketimine in Betracht, wobei dreiwertige und vor allem zweiwertige aus Diaminen und Aldehyden und Ketonen besonders bevorzugt sind. Besonders bevorzugte Diamine sind $C_2$-$C_{16}$-Alkylendiamine, vorzugsweise $C_2$-$C_{12}$-Alkylendiamine und ganz besonders bevorzugt $C_4$-$C_6$-Alkylendiamine wie 1,4-Butylendiamin, 1,5-Pentamethylendiamin und 1,6-Hexamethylendiamin.

Bevorzugt sind Cyclo-$C_6$-$C_{20}$-alkylendiamine, vorzugsweise Cyclo-$C_6$-$C_{15}$-alkylendiamine, vor allem Diaminocyclohexane, 3-Aminomethyl-3,5,5-trimethylcyclohexylamin (Isophorondiamin), Hexahydrotoluylendiamine, Diaminodicyclohexyle, Di-$C_1$-$C_4$-alkyldicyclohexylmethane bzw. -propane, Diaminodicyclohexylmethane bzw.

EP 0 656 369 A1

-propane und vor allem 3,3'-Dimethyl-4,4'-diaminodicyclohexylmethan.

Daneben eignen sich $C_4$-$C_{16}$-Oxaalkylendiamine, vorzugsweise $C_4$-$C_{12}$-Oxaalkylendiamine und ganz besonders bevorzugt $C_4$-$C_9$-Oxaalkylendiamine, darunter vor allem Di-(4-aminobutyl)ether.

Weiterhin eignen sich Polyoxyalkylenpolyamine, vorzugsweise zwei- und dreiwertige Polyoxyalkylenpolyamine wie vor allem Polyoxyethylendiamine.

Besonders bevorzugte Aldehyde sind 2,2-Dimethylpropanal und Formylisobuttersäure-$C_1$-$C_4$-alkylester, darunter vor allem der 2-Formylisobuttersäuremethylester.

Bevorzugt sind Butyraldehyd, Isobutyraldehyd, 2-Ethylhexanal, 3-Cyclohexen-1-carboxaldehyd und Hexahydrobenzaldehyd.

Weiterhin eignen sich Formaldehyd, Acetaldehyd, Trimethylacetaldehyd, Propionaldehyd und Acrolein.

Besonders bevorzugte Ketone sind Methylisopropylketon, Methylisobutylketon, Methyl-tert.-butylketon, Diethylketon und Diisobutylketon.

Bevorzugt sind Aceton, Methylethylketon, Methylpropylketon und Methylbutylketon. Weiterhin eignen sich Methyl-n-amylketon, Methylisoamylketon und Methylheptylketon.

Die Ald- und Ketimine sind bekannt oder nach bekannten Methoden erhältlich, und zwar durch Umsetzung der Diamine mit Aldehyden und/oder Ketonen, wobei ein $NH_2$/CO-Verhältnis von 1:1,1 bis 1:4 bevorzugt ist.

Zweckmäßigerweise nimmt man die Umsetzung in einem Lösungsmittel vor. Bevorzugt sind Toluol, Xylol, Benzol, Methylenchlorid, Chloroform, Dichlorethan, Cyclohexan und Heptan.

Die Umsetzung der Diamine mit den Aldehyden und/oder Ketonen erfolgt beispielsweise durch Erhitzen an einem Wasserabscheider in Gegenwart eines Inertgases wie Stickstoff oder Argon und para-Toluolsulfonsäure als Katalysator, im allgemeinen bei 40 bis 200°C, vorzugsweise bei 80 bis 130°C innerhalb von 1 bis 10 Stunden.

Die erfindungsgemäßen härtbaren Mischungen E werden aus 40 bis 98 Gew.-% einer Copolymerisates E1, 1 bis 30 Gew.-% der Verbindungen VI und 1 bis 30 Gew.-% der Verbindungen VIII hergestellt, mit der Maßgabe, daß einer Hydroxylgruppe der Verbindungen VII 1,7 bis 2,3, bevorzugt 1,9 bis 2,1 Isocyanatgruppen der Verbindungen VI entsprechen.

Die Copolymerisate E1 bestehen ihrerseits aus 60 bis 99,5 Gew.-%, vorzugsweise 64 bis 99 Gew.-% der Verbindungen I und 0,5 bis 10 Gew.-%, vorzugsweise 1 bis 6 Gew.-% der Verbindungen VII. Außerdem können bis zu 30 Gew.-% der Verbindungen IV mitverwendet werden.

Als Verbindungen VI sind in den härtbaren Mischungen E die Diisocyanate besonders bevorzugt, darunter vor allem Isophorondiisocyanat.

Die Copolymerisate E1 werden durch radikalische Polymerisation wie Masse- oder Lösungspolymerisation hergestellt, wobei die Polymerisation in Lösung bevorzugt ist.

Als Lösungsmittel werden in der Regel Ether wie Tetrahydrofuran und Dioxan, Ester wie Essigsäureethylester und -propylester sowie n-Butylacetat, Glykoletheracetate wie Methyl-, Ethyl- und Butylglycolacetat, Ketone wie Aceton und Cyclohexanon, Dialkylcarbonsäureamide wie Dimethylformamid, Dimethylacetamid und N-Methylpyrrolidon, Aromaten wie Toluol und die Xylole, aliphatische Kohlenwasserstoffe wie Isooctan und chlorierte Kohlenwasserstoffe wie tert.-Butylchlorid verwendet.

Es ist ebenso möglich, als Lösungsmittel einen Weichmacher als Polymerisationsmedium zu verwenden.

Als Initiatoren für die radikalisch ablaufende Polymerisationsreaktion können die üblichen Peroxo- oder Azoverbindungen, auch in Kombination mit Reduktionsmitteln, zweckmäßigerweise in Mengen von 0,05 bis 10 Gew.-%, bezogen auf das Gewicht der Monomeren, eingesetzt werden.

Als bevorzugte Initiatoren sind Dibenzoylperoxid, tert.-Butylperpivalat, tert.-Butylper-2-ethylhexanoat, Di-tert.-butylperoxid, tert.-Butylhydroperoxid, Cumolhydroperoxid, Dilaurylperoxid, tert.-Butylperoximaleinat, tert.-Butylperoxibenzoat, Dicumylperoxid, Didecanoylperoxid, Methylethylketonperoxid, 2,2'-Azobis-(2,4-dimethylvaleronitril), 2,2'-Azobis-(2,3-dimethylbutyronitril) und 2,2'-Azobisisobutyronitril zu nennen. Daneben eignen sich silangruppentragende Azoinitiatoren (EP-A 159 710). Besonders bevorzugte Initiatoren für die Polymerisation der Copolymerisate C2 und E1 sind hydroxylhaltige Initiatoren wie Azo-bis-cyanopentanol und 2,2'-Azobis[2-methyl-N-(2-hydroxyethyl)-propionamid].

Bevorzugte Reduktionsmittel sind Hydrazin, Natriumsulfit, Natriumhydrogensulfit, Kaliumsulfit, Kaliumhydrogensulfit, Ammoniumsulfit und Ammoniumhydrogensulfit, die in Mengen von 0,005 bis 2 Gew.-% eingesetzt werden.

Zur Steuerung der Molekularmasse können in den Copolymerisaten, die keinen Si-Regler Va bzw. Vb enthalten, übliche Regler zugesetzt werden. Bevorzugte Regler sind Tetrachlorkohlenstoff, Tetrabromkohlenstoff, Benzylbromid, Trichlorbrommethan, Butylmercaptan, n-Dodecylmercaptan, tert.-Dodecylmercaptan, Thiophenol und Thioglykolsäurealkylester wie Thioglykolsäuremethyl- und ethylester.

Besonders bevorzugte Regler für die Copolymerisate E1 sind Thiole, die im Molekül noch eine oder mehrere Hydroxylgruppen enthalten, z.B. Mercaptoethanol, Mercaptopropanol und Thioglycerin.

4

Diese werden bevorzugt in Mengen von 0,2 bis 6 Gew.-%, besonders bevorzugt von 0,5 bis 2 Gew.-% eingesetzt. Im Falle der Verwendung dieser Regler und/oder hydroxylhaltiger Initiatoren ermäßigt sich die Menge der alkoholischen Verbindungen VII entsprechend.

Im allgemeinen führt man die Polymerisation bei 0 bis 200°C, vorzugsweise bei 60 bis 130°C durch.

Zweckmäßigerweise wird die Umsetzung bei Normaldruck vorgenommen, jedoch kann man auch bei vermindertem oder leicht erhöhtem Druck arbeiten, also etwa im Bereich von 0,5 bis 5 bar.

Die Reaktionszeiten betragen normalerweise 1 bis 30, meistens 3 bis 6 Stunden.

Verfahrenstechnisch geht man bei der Lösungspolymerisation in der Regel so vor, daß man einen Teil des Lösungsmittels, gegebenenfalls mit Trocknungsmittel und/oder einem Teil der Monomeren III auf die Reaktionstemperatur erhitzt und die Monomermischung, den Regler und Initiator sowie die Restmenge des Lösungsmittels kontinuierlich zuführt, bevorzugt gleichzeitig in getrennten Zuläufen.

Bei der Massepolymerisation wird im allgemeinen ein Teil der Polymerisationsansatzes vorgelegt, auf die Polymerisationstemperatur erhitzt, wonach anschließend der Rest kontinuierlich zugeführt wird.

Nach beendetem Zulauf setzt man die Polymerisation, gegebenenfalls unter Zusatz weiterer Initiatormengen, noch etwa für eine Zeit von 2 Stunden fort, um Restmonomerengehalte abzusenken. Man kann die Restmonomeren aber ebenso durch Destillation des Lösungsmittels entfernen.

Um eine vorzeitige Vernetzung der Isocyanatgruppen bereits während der Polymerisation oder während der Lagerung zu vermeiden arbeitet man zweckmäßigerweise in nahezu wasserfreiem Polymerisationsmedium, d.h. bei einem Wassergehalt unter 500 ppm, bevorzugt unter 100 ppm. Hierzu verwendet man im allgemeinen Trocknungsmittel, auch in Kombination mit Lewis-Säuren, die die Hydrolyse der Trocknungsmittel beschleunigen.

Bevorzugte Trocknungsmittel sind Tetraalkoxysilane wie Tetraethoxysilan, Orthoameisensäuretrialkylester wie Triethylorthoformiat und Isocyanate wie Phenylisocyanat.

Bevorzugte K-Werte der Copolymerisate E1 liegen zwischen 8 und 80, besonders bei 10 bis 50 und vor allem zwischen 12 und 35.

Die K-Werte sind relative Viskositätszahlen, die in Analogie zur DIN 53726 bei 25°C bestimmt werden. Die K-Werte der Copolymerisate B1 mit Si-Regler-Anteilen und der Copolymerisate D1 werden in Toluol gemessen, die Bestimmung der K-Werte der übrigen Copolymerisate erfolgt in Tetrahydrofuran.

Zur Herstellung der härtbaren Mischungen E gemäß der Erfindung werden zunächst die hydroxylhaltigen Copolymerisate E1 mit den Verbindungen VI entsprechend der Umsetzung der Copolymerisate C2 mit den Verbindungen VI zur Reaktion gebracht. Anschließend wird das Umsetzungsprodukt aus den Copolymerisaten E1 und den Verbindungen VI bei 0 bis 150°C, vorzugsweise 20 bis 70°C mit den Verbindungen VIII gemischt, wobei die Einsatzmengen zweckmäßigerweise so bemessen sind, daß pro Isocyanatgruppe des Umsetzungsproduktes bevorzugt 0,2 bis 1,3, besonders bevorzugt 0,5 bis 1 Imingruppen der Verbindungen VIII vorliegen.

Um die Hydrolysegeschwindigkeit der Aldimine und Ketimine in Gegenwart von Feuchtigkeit zu erhöhen, kann man den Mischungen E außerdem bevorzugt organische Carbonsäuren oder Arylsulfonsäuren zusetzen. Als bevorzugte aliphatische Carbonsäuren sind die Ameisen-, Essig- sowie die Mono-, Di- und Trichloressigsäure zu nennen. Besonders bevorzugt sind aromatische Carbonsäuren wie die Mono-, Di- und Trichlorbenzoesäure, Salicylsäure und ganz besonders die Benzoesäure. Weiterhin eignen sich Arylsulfonsäuren wie die Xylolsulfonsäure und vor allem die Toluolsulfonsäure, wobei ihre Mischungen bevorzugt sind.

Um eine verbesserte Homogenisierung der erfindungsgemäßen Mischungen zu erreichen, ist es auch möglich, die Copolymerisate und die Vernetzungskomponenten zunächst im wasserfreien Lösungsmittel zu lösen und das Lösungsmittel dieser Lösungen wieder destillativ zu entfernen.

Die härtbaren Mischungen E gemäß der Erfindung können als mit Luftfeuchtigkeit selbsthärtbare Kleb-, Dichtungs- und Beschichtungsmassen verwendet werden und werden als solche bevorzugt lösungsmittelfrei eingesetzt.

Die mit Luftfeuchtigkeit selbsthärtbaren Kleb-, Dichtungs- und Beschichtungsmassen können noch übliche Zusatzstoffe, im allgemeinen in Mengen bis zu 400 Gew.-%, bezogen auf die härtbaren Mischungen enthalten.

Übliche Zusatzstoffe sind beispielsweise Weichmacher, Füllstoffe, Verstärkungsmittel, Härtungsbeschleuniger und Lösungsmittel.

Bevorzugte Weichmacher zur Erniedrigung der Glastemperatur und der Viskosität sind Phthalsäureester wie Diethyl-, Di-n-butyl-, Di-isoheptyl-, Di-(2-ethylhexyl)- und Butylbenzylphthalat, Adipinsäureester wie Di-2-ethylhexyl- und Di-iso-octyladipat, Sebacinsäureester wie Di-(2-ethylhexyl)- und Dioctylsebacinat, Polyalkylenglykolester wie Di- und Triethylenglykoldibenzoat, Phosphorsäureester wie Tri-n-butyl-, Tri-isobutyl- und Tri-(β-chlorethyl)phosphat, chlorierte Kohlenwasserstoffe, Alkyldiphenyle und partiell hydrierte Terphenyle.

Die Weichmacher werden üblicherweise in Mengen von 1 bis 20 Gew.-% eingesetzt.

Bevorzugte Füllstoffe und Verstärkungsmittel sind hydrophobiertes Calciumcarbonat, Magnesiumcarbonat, Talk, Titandioxid, Bariumsulfat, Aluminiumoxid, hydrophobiertes Siliciumdioxid, Metallpulver wie Zink- und Eisenpulver, Bentonit, Kaolin und Ruß, die im allgemeinen in Mengen bis zu 300 Gew.-%, vorzugsweise bis zu 100 Gew.-% eingesetzt werden.

Die Füllstoffe werden in der Regel in feiner Körnung zugegeben, wobei die durchschnittliche Korngröße vorzugsweise 0,01 bis 200 µm, insbesondere 0,01 bis 10 µm beträgt.

Bevorzugte härtungsbeschleuniger für die Umsetzung der freien Isocyanatgruppen sind organische Metallverbindungen wie Bis-[dodecanoyloxy]-dibutyl-zinn, Bis-[dodecanoyloxy]-dioctyl-Zinn, Zinnoctylat, Manganoctylat und Monobutylzinnoxid, Aminverbindungen wie N,N-Dimethylcyclohexylamin, Tri-n-butylamin, Triethylendiamin, N,N-Dimethylbenzylamin und 1,8-Diazobicyclo-[5.4.6]-undecen-7 sowie deren Salze, z.B. die Hydrochloride.

Die Härtungsbeschleuniger werden im allgemeinen in Mengen von 0,01 bis 10 Gew.-% verwendet.

Lösungsmittel werden bevorzugt dann zugesetzt, wenn die Copolymerisate durch Massenpolymerisation hergestellt wurden oder das Lösungsmittel nach der Lösungsmittelpolymerisation zusammen mit den Restmonomeren abdestilliert wurde. Bevorzugte Lösungsmittel zur Verbesserung der Verarbeitbarkeit und zur Erniedrigung der Viskosität sind solche, die bereits für die Polymerisation verwendet wurden, beispielsweise aromatische Kohlenwasserstoffe wie Toluol und Xylol und Ketone wie Aceton und Methylethylketon, die üblicherweise in Mengen bis zu 50 Gew.-% eingesetzt werden.

Zur Erniedrigung der Viskosität lösungsmittelfreier Massen können diese auf bis zu 150°C, bevorzugt auf bis zu 100°C erwärmt und im erwärmten Zustand angewendet werden, wodurch eine hohe Anfangshaftung erreicht wird.

Die erfindungsgemäßen Massen können in Form von Einkomponentensystemen hergestellt werden, indem man alle Bestandteile miteinander vermischt und in einem abgedichteten Behälter gebrauchsfertig lagert. Sie können aber auch als Zweikomponentensysteme verwendet werden, bei denen die Copolymerisate und die Vernetzungskomponenten getrennt gelagert und erst kurz vor der Anwendung zusammengerührt werden.

Im Falle eines Einkomponentensystems muß besonders sorgfältig auf den Ausschluß von Wasser geachtet werden, um vorzeitiges Aushärten zu vermeiden.

Im Falle eines Zweikomponentensystems ist die Anwesenheit geringer Spuren Wasser in den Ausgangs- und Zusatzstoffen weniger kritisch, was sowohl die Verarbeitung der Ausgangsstoffe als auch die Lagerung des Zweikomponentensystems erleichtert.

Die erfingungsgemäßen Mischungen E finden als mit Luftfeuchtigkeit selbsthärtbare Kleb-, Dichtungs- und Beschichtungsmassen Verwendung.

Als solche eignen sie sich zum Verkleben von organischen und anorganischen Materialien untereinander oder miteinander, zum Abdichten sowie zum Beschichten solcher Materialien wie z.B. Metall, Holz, Glas, Keramik, Stein, Beton, Kunststoffen, Textilien, Leder, Pappe und Papier.

Die Massen gemäß der Erfindung härten bei Einwirkung von Luftfeuchtigkeit innerhalb kurzer Zeit aus und weisen im gehärteten Zustand eine erhöhte Elastizität und Dehnfähigkeit, jedoch keine Oberflächenklebrigkeit auf. Sie zeigen darüber hinaus im gehärteten Zustand ein erhöhtes Haftvermögen auf Untergrundmaterialien wie Aluminium, Holz, Glas, Keramik, Beton, Mauerwerk sowie den meisten Kunststoffen.

Beispiele

Die Verbindungen I, II, III, IV, V, VII und R bilden zusammen jeweils 100 Gew.-% und entsprechen der Zusammensetzung des Polymerisats. Die Gewichtsangabe des Initiators I in Gew.-% bezieht sich jeweils auf das Polymerisat. Die Gewichtsangaben des Lösungsmittels L und des Trocknungsmittels T beziehen sich auf die gesamte Polymerlösung.

Bestimmung der Reißdehnung und Reißfestigkeit

Zur Bestimmung der Reißdehnung und Reißfestigkeit wurden aus den härtbaren Mischungen B/7 bis B/12, B/15 bis B/24 und B/27 bis B/35 1 mm dicke Folien durch Auftragen auf Silikonpapier hergestellt, die 3 Wochen bei Raumtemperatur gelagert wurden. Anschließend wurden aus den Folien Probekörper ausgestanzt, wonach die Reißdehnung und Reißfestigkeit nach DIN 53 504 bei einer Vorschubgeschwindigkeit von 100 mm/min unter Verwendung des Probekörpers S3A gemessen wurden.

Beispiele E/1 bis E/15

E) Herstellung von härtbaren Mischungen E

1) Herstellung von Copolymerisaten E1 durch Lösungspolymerisation

Eine Vorlage V wurde nach dem Erwärmen auf die Temperatur T im Laufe von a Stunden in Stickstoffatmosphäre mit dem Zulauf 1 und im Laufe von b Stunden mit dem Zulauf 2 versetzt, wobei die Zuläufe gleichzeitig, aber getrennt zugegeben wurden.

Danach wurden 0,5 Gew.-% tert.-Butyl-per-2-ethylhexanoat zugesetzt, wonach c Stunden bei d°C nachpolymerisiert wurde.

Im Falle der Copolymerisate E1/6 und E1/9 wurde schließlich das Lösungsmittel vollständig abdestilliert, im Falle des Copolymerisates E1/8 wurde das Lösungsmittel direkt nach der Zugabe von Zulauf 2 abdestilliert und dann wurde das Polymerisat erneut in 400 g Toluol aufgenommen.

Tabelle 17 zeigt die Zusammensetzungen der Vorlage V und der Zuläufe 1 und 2, die Einzelheiten der versuche sowie die in THF gemessenen K-Werte der Copolymerisate E1/1 bis E1/9 und die Feststoffgehalte der erhaltenen Copolymerisatlösungen vor der Destillation.

2) Herstellung von Copolymerisaten E1 durch Massepolymerisation

Von einem Gemisch G wurden 40 ml vorgelegt und unter Stickstoffatmosphäre auf 80°C erwärmt. Nach einer Anpolymerisationszeit von 5 Minuten wurde die Festmenge innerhalb von 2,5 Stunden zugesetzt. Anschließend wurde 1 Stunde bei 120°C nachpolymerisiert und dann Restmonomere abdestilliert.

Tabelle 18 zeigt die Einzelheiten dieser Versuche und die in THF gemessenen K-Werte der lösungsmittelfreien Copolymerisate E1/10, E1/11 und E1/12.

3) Umsetzungsprodukte aus den Copolymerisaten E1 und den Verbindungen VI

Zu a Gew.-% der Copolymerisate E1 wurden 0,5 Gew.-% Urethanisierungskatalysatoren U und b Gew.-% der Verbindungen VI zugesetzt, wonach im Falle der Copolymerisate E1/1 bis E1/15 sowie der lösungsmittelfreien Copolymerisate E1/6, E1/9, E1/10, E1/11 und E1/12 10 Stunden auf 130°C unter Stickstoffatmosphäre erhitzt wurde bzw. im Falle der Copolymerisate E1/7 und E1/8 die Umsetzung bei Raumtemperatur durchgeführt wurde.

Die Einzelheiten dieser Versuche sowie deren Ergebnisse sind der Tabelle 19 zu entnehmen.

4) Herstellung von härtbaren Mischungen E

Zu a Gew.-% der auf 40°C erwärmten Umsetzungsprodukte 1 bis 10 aus den Copolymerisaten E1 und den Verbindungen VI wurden b Gew.-% Aldimine bzw. Ketimine VIII sowie in einigen Fällen c Gew.-% Bis-[dodecanoyloxy]-dibutylzinn und d Gew.-% einer 10 gew.-%igen Lösung von Benzoesäure in Di-(3-oxapentyl)-phthalat zugegeben.

Die Einzelheiten dieser Versuche sind Tabelle 20 zu entnehmen.

Zum Vergleich sind die Beispiele V/6 bis V/15 aufgeführt, wobei Beispiel V/6 gemäß Beispiel 1 der DE-A-29 15 864 und die Beispiele V/7 bis V/15 gemäß deren allgemeinen Lehre durchgeführt worden.

Anwendungstechnische Eigenschaften

Als anwendungstechnische Eigenschaften der erfindungsgemäpen härtbaren Mischungen E/1 bis E/5 wurden die Reißdehnung und Reißfestigkeit ermittelt.

Als anwendungstechnische Eigenschaften der erfindungsgemäßen härtbaren Mischungen E/6 bis E/15 wurde die Zahl der Luftblaseneinschlüsse ermittelt. Zum Vergleich wurden die entsprechenden Werte der Beispiele V/6 bis V/15 aufgeführt, wobei das Vergleichsbeispiel V/6 gemäß Beispiel 1 der DE-A-29 15 864 und die Beispiele V/7 bis V/15 gemäß deren allgemeinen Lehre durchgeführt wurden.

A) Bestimmung der Reißdehnung und Reißfertigkeit

Die Bestimmung der Reißdehnung und Reißfestigkeit wurde analog zu den härtbaren Mischungen B durchgeführt.

Tabelle 20 zeigt die Ergebnisse dieser Prüfungen. In allen Fällen zeigten die erfindungsgemäßen Mischungen E/1 bis E/5 hohe Elastizitäten.

B) Bestimmung der Zahl der Luftblaseneinschlüsse

Zur Bestimmung der Zahl der Luftblaseneinschlüsse wurden aus den härtbaren Mischungen E/6 bis E/15 sowie den zugehörigen Vergleichsmischungen V/6 bis V/15 2 mm dicke Folien durch Auftragung auf Silikonpapier hergestellt, die für die Dauer von 3 Wochen gelagert wurden.

Anschließend wurden die Folien nach ihrem Luftblaseneinschluß mit den Werten 1 bis 6 nach Augenschein bewertet. Hierbei bedeutet der Wert 1, daß keine Luftblasen beobachtet wurden, und der Wert 6 entspricht einem gehäuften Auftreten von Luftblasen.

Die Ergebnisse der Prüfung sind Tabelle 21 zu entnehmen.

In allen Fällen zeigten die Folien der erfindungsgemäßen Mischungen E/6 bis E/15 wenig Luftblasen, während die Zahl der Luftblaseneinschlüsse in den Folien der Vergleichsmischungen v/6 bis V/15 beträchtlich war.

Bedeutung der Abkürzungen in den Tabellen 1 bis 21

Verbindungen I

I/1 =    Methylacrylat
I/2 =    Ethylacrylat
I/3 =    n-Butylacrylat
I/4 =    Ethylhexylacrylat
I/5 =    Methylmethacrylat

Verbindungen II

II/1 =    5-Isocyanato-3-oxapentylmethacrylat
II/2 =    Isocyanatoethylacrylat

Verbindungen III

III/1 =    Maleinsäureanhydrid
III/2 =    Itaconsäureanhydrid

Verbindungen IV

IV/1 =    Acrylnitril
IV/2 =    Styrol
IV/3 =    Vinylacetat

Verbindungen V

V/1 =    Mercaptopropyltrimethoxysilan
V/2 =    Mercaptopropyltriethoxysilan

Verbindungen VI

VI/1 =    Prepolymer 1 )
VI/2 =    Prepolymer 2 ) siehe Tabelle 5
VI/3 =    Prepolymer 3 )
VI/4 =    Prepolymer 4 )
VI/5 =    5-Isocyanat-3-(isocyanatmethyl)-1,1,3-trimethylcyclohexan (Isophorondiisocyanat)
VI/6 =    Bis-[4-isocyanatphenyl]-methan
VI/7 =    2,4-Bis-[isocyanat]-toluol
VI/8 =    1,6-Bis-[isocyanat]-hexan
VI/9 =    Bis-[6-isocyanat-hexylaminocarbonyl]-(6-isocyanat-hexyl)-amin, Isocyanatgehalt 23 Gew.-%
IV/10 =    2,4,6-Trioxo-1,3,5-tris-[6-isocyanat-1-hexyl]-hexahydro-1,3,5-triazin, Isocyanatgehalt 22 Gew.-%

Alkylenoxide Alk

Alk/1 =    Ethylenoxid
Alk/2 =    1,2-Propylenoxid

Starter S

S/1 =    Glycerin
S/2 =    Dipropylenglykol

Verbindungen VII

| VII/1 = | Hydroxyethylacrylat |
| VII/2 = | Hyroxypropylacrylat |
| VII/3 = | Hydroxybutylacrylat |
| VII/4 = | Hydroxyhexylacrylat |
| VII/5 = | Polyethylenglykolmonomethacrylat |

Verbindungen VIII

| VIII/1 = | Aldimin 1 aus 1,6-Hexamethylendiamin und 2,2-Dimethylpropanal |
| VIII/2 = | Aldimin 2 aus 1,6-Hexamethylendiamin und 2-Formylisobuttersäuremethylester |
| VIII/3 = | Aldimin 3 aus 3-Aminomethyl-3,5,5-trimethylcyclohexylamin (Isophorondiamin) und Isobutyraldehyd |
| VIII/4 = | Aldimin 4 aus Polyoxypropylendiamin und -triamin und 2,2-Dimethylpropanal |
| VIII/5 = | Ketimin 1 aus 1,6-Hexamethylendiamin und Methylisobutylketon |
| VIII/6 = | Ketimin 2 aus Bis-(4-amino-cyclohexyl)-methan und Methylisobutylketon |

Amine Am

| Am/1 = | 1,6-Hexamethylendiamin |
| Am/2 = | 3-Aminomethyl-3,5,5-trimethylcyclohexylamin (Isophorondiamin) |
| Am/3 = | Polyoxypropylendiamin, MG 230 |
| Am/4 = | Polyoxypropylentriamin, MG 440 |
| Am/5 = | Bis-(4-amino-cyclohexyl)-methan |

Aldehyde Ald

| Ald/1 = | 2,2-Dimethylpropanal |
| Ald/2 = | 2-Formylisobuttersäuremethylester |
| Ald/3 = | Isobutyraldehyd |

Ketone Ket

| Ket/1 = | Methylisobutylketon |

Lösungsmittel L

| L/1 = | Toluol |
| L/2 = | Essigsäureethylester |
| L/3 = | Cyclohexan |

Initiatoren I

| I/1 = | 2,2'-Azobisisobutyronitril |
| I/2 = | tert.-Butylper-2-ethylhexanoat |
| I/3 = | tert.-Butylperoctoat |

Regler R

| R/1 = | Mercaptoethanol |
| R/2 = | Thioglykolsäureethylester |
| R/3 = | Thioglycerin |
| R/4 = | tert.-Dodecylmercaptan |
| R/5 = | tert.-Mercaptoessigsäuremethylester |

Trocknungsmittel T

T/1 =   Triethylorthoformiat
T/2 =   Tetraethoxysilan

Urethanisierungskatalysatoren U

U/1 =   Bis-[dodecanoyloxy]-dibutyl-zinn
U/2 =   Bis-[ethylhexanoyloxy]-zinn
U/3 =   1,4-Diaza-bicyclo[2.2.2]-octan

Füllstoffe und Verstärkungsmittel F

F/1 =   hydrophobiertes Calciumcarbonat
F/2 =   hydrophobiertes Siliciumdioxid
F/3 =   Titandioxid

Tabelle 17

Copolymerisate E1 durch Lösungspolymerisation

|  | E1/1 | E1/2 | E1/3 | E1/4 | E1/5 | E1/6 | E1/7 | E1/8 | E1/9 |
|---|---|---|---|---|---|---|---|---|---|
| Vorlage V: |  |  |  |  |  |  |  |  |  |
| L/1 | 30 | 30 | 30 | 30 | 30 |  | 30 | 30 | 30 |
| L/2 |  |  |  |  |  | 30 |  |  |  |
| T [°C] | 100 | 100 | 100 | 100 | 90 | 75 | 100 | 100 | 80 |
| Zulauf 1: |  |  |  |  |  |  |  |  |  |
| 1/2 |  |  |  | 94 | 84 | 97 | 67 |  | 90 |
| 1/3 | 95 | 95 | 92 |  |  |  |  | 60 |  |
| 1/5 |  |  |  |  |  |  | 30 |  |  |
| IV/1 |  |  |  |  | 13 |  |  |  | 7 |
| IV/3 |  |  |  |  |  |  |  | 35 |  |
| VII/1 | 3 |  | 5 |  | 2 | 2 |  |  | 2 |
| VII/2 |  | 3 |  |  |  |  |  |  |  |
| VII/3 |  |  |  | 4 |  |  | 2 |  |  |
| VII/4 |  |  |  |  |  |  |  | 3 |  |
| R/1 | 2 | 2 | 3 | 2 | 1 |  |  |  | 1 |
| R/2 |  |  |  |  |  | 1 | 1 |  |  |
| R/3 |  |  |  |  |  |  |  | 2 |  |
| a [h] | 3,0 | 1,5 | 1,5 | 2,0 | 2,5 | 2,0 | 2,0 | 3,0 | 3,0 |

EP 0 656 369 A1

Tabelle 17 (Fortsetzung)

|  | E1/1 | E1/2 | E1/3 | E1/4 | E1/5 | E1/6 | E1/7 | E1/8 | E1/9 |
|---|---|---|---|---|---|---|---|---|---|
| Zulauf 2: |  |  |  |  |  |  |  |  |  |
| L/1 | 10 | 10 | 10 | 10 | 10 |  | 10 | 10 | 10 |
| L/2 |  |  |  |  |  | 10 |  |  |  |
| I/1 | 0,3 | 0,3 | 0,5 | 0,5 | 0,5 | 0,5 | 0,5 | 0,5 | 0,5 |
| b [h] | 3,5 | 2,0 | 2,0 | 2,5 | 3,0 | 2,5 | 2,5 | 3,5 | 3,5 |
| c [h] | 1,5 | 1,0 | 1,0 | 1,0 | 1,5 | 2,0 | 2,0 | 2,4 | 2,0 |
| d [°C] | 140 | 140 | 140 | 140 | 140 | 100 | 140 | 140 | 140 |
| K-Wert | 14,9 | 14,3 | 12,7 | 17,6 | 30,3 | 19,2 | 20,7 | 23,7 | 22,8 |
| Feststoff-gehalt | 59,5 | 60 | 59,5 | 59 | 58 | 59 | 58 | 58 | 58,5 |

EP 0 656 369 A1

Tabelle 18

| Copolymerisate E1 durch Massepolymerisation | | | |
|---|---|---|---|
| | E1/10 | E1/11 | E1/12 |
| Gemisch G: | | | |
| I/2 | 97 | 62 | |
| I/3 | | 31 | |
| I/4 | | | 96 |
| VII/2 | | | 3 |
| VII/3 | 2 | | |
| VII/5 | | 5 | |
| I/1 | 0,5 | 0,6 | 0,5 |
| R/1 | | | 1 |
| R/2 | 1 | | |
| R/4 | | 2 | |
| | | | |
| K-Wert | 23,2 | 22,5 | 19,3 |

Tabelle 19

Umsetzungsprodukte aus den Copolymerisaten E1 und den Verbindungen VI

| Umsetzungs-produkt | a [Gew.-%] | Cop. E1 | U | b [Gew.-%] | Verb. VI | NCO-Gehalt |
|---|---|---|---|---|---|---|
| 1 | 91,3 | E1/1 | U/1 | 8,7 | VI/7 | 1,2 |
| 2 | 89,8 | E1/2 | U/1 | 10,2 | VI/5 | 1,2 |
| 3 | 85,3 | E1/3 | U/1 | 14,7 | VI/5 | 1,7 |
| 4 | 90,1 | E1/4 | U/1 | 9,9 | VI/5 | 1,1 |
| 5 | 97,1 | E1/5 | U/1 | 2,9 | VI/5 | 0,5 |
| 6 | 96,3 | E1/6 | U/1 | 3,7 | VI/5 | 0,7 |
| 7 | 97,7 | E1/7 | U/1 | 2,3 | VI/8 | 0,3 |
| 8 | 89,4 | E1/8 | U/3 | 10,6 | VI/6 | 1,0 |
| 9 | 93,7 | E1/9 | U/1 | 6,3 | VI/5 | 1,2 |
| 10 | 97 | E1/10 | U/1 | 3 | VI/5 | 0,6 |
| 11 | 96,5 | E1/11 | U/1 | 3,5 | VI/5 | 0,7 |
| 12 | 91,7 | E1/12 | U/1 | 8,3 | VI/5 | 1,6 |

EP 0 656 369 A1

Tabelle 20

Härtbare Mischungen E

| Mischung E | a [Gew.-%] | Umsetzungs-produkt | b [Gew.-%] | Verb. VIII | c [Gew.-%] | d [Gew.-%] | Rf [N/mm] | Rd [%] |
|---|---|---|---|---|---|---|---|---|
| E/1 | 98 | 2 | 2 | VIII/3 | – | 0,2 | 0,2 | 410 |
| E/2 | 96 | 3 | 4 | VIII/6 | 0,3 | – | 0,2 | 250 |
| E/3 | 99 | 5 | 1 | VIII/1 | – | – | 0,9 | 360 |
| E/4 | 99 | 7 | 1 | VIII/5 | 0,5 | – | 0,3 | 220 |
| E/5 | 97 | 9 | 3 | VIII/2 | – | 0,5 | 0,5 | 600 |
| E/6 | 97 | 1 | 3 | VIII/5 | – | – | | |
| V/6[1] | 100 | 1 | – | – | 0,5 | – | | |
| E/7 | 97 | 2 | 3 | VIII/3 | 0,5 | – | | |
| V/7[2] | 100 | 2 | – | – | 0,5 | – | | |
| E/8 | 94 | 3 | 6 | VIII/6 | 0,5 | – | | |
| V/8[2] | 100 | 3 | – | – | 0,5 | – | | |
| E/9 | 97 | 4 | 3 | VIII/2 | – | – | | |
| V/9[2] | 100 | 4 | – | – | 0,5 | – | | |
| E/10 | 98 | 5 | 2 | VIII/1 | – | – | | |
| V/10[2] | 100 | 5 | – | – | 0,5 | – | | |
| E/11 | 98 | 6 | 2 | VIII/5 | . | 0,5 | | |
| V/11[2] | 100 | 6 | – | – | 0,5 | – | | |
| E/12 | 99 | 7 | 1 | VIII/5 | – | 0,5 | | |
| V/12[2] | 100 | 7 | – | – | 0,5 | – | | |
| E/13 | 97 | 8 | 3 | VIII/.. | – | 0,5 | | |
| V/13[2] | 100 | 8 | – | – | 0,5 | – | | |
| E/14 | 96 | 9 | 4 | VIII/2 | – | – | | |
| V/14[2] | 100 | 9 | – | – | 0,5 | – | | |
| E/15 | 96 | 10 | 4 | VIII/2 | – | – | | |
| V/15[2] | 100 | 10 | – | – | 0,5 | – | | |

[1] gemäß Beispiel 1 der DE-A-29 15 864
[2] gemäß DE-A-29 15 864

EP 0 656 369 A1

Tabelle 21

Zahl der Luftblaseneinschlüsse in den Folien der Mischungen E/6 bis E/15 und der Vergleichsmischungen V/6 bis V/15 nach Augenschein

| Mischung E bzw. Vergleichsmischung V | Note |
|---|---|
| E/6 | 2 |
| V/6[1] | 4 |
| E/7 | 2 |
| V/7[2] | 5 |
| E/8 | 2-3 |
| V/8[2] | 5-6 |
| E/9 | 1-2 |
| V/9[2] | 5 |
| E/10 | 2 |
| V/10[2] | 3-4 |
| E/11 | 1-2 |
| V/11[2] | 4 |
| E/12 | 1-2 |
| V/12[2] | 4 |
| E/13 | 3 |
| V/13[2] | 6 |
| E/14 | 2 |
| V/14[2] | 5 |
| E/15 | 1-2 |
| V/15[2] | 4 |

[1] gemäß Beispiel 1 der DE-A-29 15 864
[2] gemäß DE-A-29 15 864

**Patentansprüche**

1. Mit Luftfeuchtigkeit selbsthärtbare Mischungen von Copolymerisaten auf der Basis von Acrylsäure-, Methacrylsäure- und/oder Vinylestern mit Vernetzungskomponenten folgenden Aufbaus bzw. Zusammensetzung:

E) härtbare Mischungen aus

1) 40 bis 98 Gew.-% eines Copolymerisates E1 (= 100 Gew.-%) aus

a) 60 bis 99,5 Gew.-% eines oder mehrerer $C_1$-$C_{24}$-Alkylester der Acryl- und/oder Methacrylsäure und/oder $C_1$-$C_2$-Vinylester (Verbindungen I),

b) 0,5 bis 10 Gew.-% eines Comonomeren mit einer oder mehreren Hydroxylgruppen (Verbindungen VII) und

c) 0 bis 30 Gew.-% weiterer Monomerer (Verbindungen IV),

und

16

2) 1 bis 30 Gew.-% eines zwei- oder mehrwertigen Isocyanats (Verbindungen VI) und

3) 1 bis 30 Gew.-% eines zwei- oder mehrwertigen Aldimins und/oder Ketimins (Verbindungen VIII), mit der Maßgabe, daß einer Hydroxylgruppe der Verbindungen VII 1,7 bis 2,3 Isocyanatgruppen der Verbindungen VI entsprechen.

2.  Mit Luftfeuchtigkeit selbsthärtbare Mischungen aus derartigen Copolymerisaten mit Vernetzungskomponenten nach Anspruch 1, die folgenden Aufbau bzw. folgende Zusammensetzung haben:
    E) härtbare Mischungen aus
    1) 40 bis 98 Gew.-% eines Copolymerisates E1 (= 100 Gew.-%) aus
        a) 64 bis 99 Gew.-% der Verbindungen I,
        b) 1 bis 6 Gew.-% der Verbindungen VII und
        c) 0 bis 30 Gew.-% der Verbindungen IV
    und
    2) 1 bis 30 Gew.-% der Verbindungen VI
    und
    3) 1 bis 30 Gew.-% der Verbindungen VIII, mit der Maßgabe, daß einer Hydroxylgruppe der Verbindungen VII 1,9 bis 2,1 Isocyanatgruppen der Verbindungen VI entsprechen.

3.  Mit Luftfeuchtigkeit selbsthärtbare Mischungen aus derartigen Copolymerisaten mit Vernetzungskomponenten nach Anspruch 1 oder 2, zu deren Herstellung $C_1$-$C_4$-Alkylester der Acryl- und/oder Methacrylsäure als Verbindungen I verwendet werden.

4.  Mit Luftfeuchtigkeit selbsthärtbare Mischungen aus derartigen Copolymerisaten mit Vernetzungskomponenten nach Anspruch 1 bis 3, zu deren Herstellung Acryl- und/oder Methacrylnitril und/oder Styrol als Verbindungen IV verwendet werden.

5.  Mit Luftfeuchtigkeit selbsthärtbare Mischungen aus derartigen Copolymerisaten mit Vernetzungskomponenten nach Anspruch 1 bis 4, zu deren Herstellung Di- und/oder Triisocyanate als Verbindungen VI verwendet werden.

6.  Mit Luftfeuchtigkeit selbsthärtbare Mischungen aus derartigen Copolymerisaten mit Vernetzungskomponenten nach Anspruch 1 bis 5, zu deren Herstellung Hydroxy-$C_2$-$C_6$-alkylester der Acryl- und/oder Methacrylsäure als Verbindungen VII verwendet werden.

7.  Mit Luftfeuchtigkeit selbsthärtbare Mischungen aus derartigen Copolymerisaten mit Vernetzungskomponenten nach Anspruch 1 bis 6, zu deren Herstellung zweiwertige Aldimine und/oder Ketimine als Verbindungen VIII verwendet werden.

8.  Verwendung der härtbaren Mischungen E gemäß Anspruch 1 bis 7 als mit Luftfeuchtigkeit selbsthärtbare Kleb-, Dichtungs- und Beschichtungsmassen.

9.  Mit Luftfeuchtigkeit selbsthärtbare Kleb-, Dichtungs- und Beschichtungsmassen, enthaltend die härtbaren Mischungen E gemäß Anspruch 1 bis 7.

Europäisches
Patentamt

## EUROPÄISCHER RECHERCHENBERICHT

Nummer der Anmeldung

EP 94 11 6226

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| X | EP-A-0 149 765 (AMERICAN CYANAMID CO ) 31.Juli 1985 <br> * Seite 7, Zeile 24 - Zeile 29 * <br> * Ansprüche; Beispiele 6-8 * <br> --- | 1-9 | C08F2/38 <br> C08F220/12 <br> C08G18/62 <br> C08K5/29 <br> C08L33/06 <br> C08F8/30 |
| A | EP-A-0 075 206 (BASF AG ) 30.März 1983 <br> * das ganze Dokument * <br> --- | 1-9 | |
| A | WO-A-90 00570 (BASF LACKE & FARBEN ) 25.Januar 1990 <br> * Ansprüche * <br> --- | 1-9 | |
| D,Y | DE-A-37 10 963 (BAYER AG ) 20.Oktober 1988 <br> * das ganze Dokument * <br> --- | 1-9 | |
| Y | EP-A-0 054 632 (GOLDSCHMIDT AG TH ) 30.Juni 1982 <br> * das ganze Dokument * <br> --- | 1-9 | |
| A | EP-A-0 118 821 (BAYER AG ) 19.September 1984 <br> * Ansprüche * <br> --- | 1 | **RECHERCHIERTE SACHGEBIETE (Int.Cl.5)** <br> C08G <br> C08F <br> C09D <br> C09J |
| A | GB-A-2 172 292 (MITSUBISHI RAYON CO) 17.September 1986 <br> * Ansprüche * <br> ----- | 1 | |

Der vorliegende Recherchenbericht wurde für alle Patentansprüche erstellt

| Recherchenort | Abschlußdatum der Recherche | Prüfer |
|---|---|---|
| DEN HAAG | 24.März 1995 | Kaumann, E |

EPO FORM 1503 03.82 (P04C03)